# EUROPÄISCHE PATENTSCHRIFT

(11) **EP 0 694 941 B1**
(45) Veröffentlichungstag und Bekanntmachung des Hinweises auf die Patenterteilung: **03.12.1997**
(21) Anmeldenummer: 95110861.2
(22) Anmeldetag: 12.07.1995
(51) Int. Cl.: H01H 43/10, F16H 27/04

(54) **Verteilergetriebe**
Transfer gear
Boîte de transfert

(30) Priorität: 28.07.1994 DE 4426679
(43) Veröffentlichungstag der Anmeldung: 31.01.1996
(73) Patentinhaber: AKO-Werke GmbH & Co. KG, 88239 Wangen im Allgäu (DE)
(72) Erfinder: Schmid, Bertram, D-88279 Amtzell (DE); Kastner, Hans, D-88239 Wangen im Allgäu (DE); Illerhaus, Edmund, D-88339 Bad Waldsee (DE); Siebachmeyer, Fritz, D-88099 Neukirch (DE)
(74) Vertreter: Gaiser, Hartmut, Dipl.-Ing.

(56) Entgegenhaltungen:
- DE-A- 2 040 464
- GB-A- 2 171 839
- US-A- 4 466 310

## Beschreibung

Die Erfindung betrifft ein Verteilergetriebe, beispielsweise für ein elektromechanisches Programmschaltwerk.

Bei einem elektromechanischen Programmschaltwerk (vgl. DE 20 40 464 C2) sind von einem einzigen Synchronmotor übel ein Klinkengetriebe eine Reversiertrommel und eine Programmtrommel antreibbar.

Aufgabe der Erfindung ist es, ein Verteilergetriebe vorzuschlagen, mit dem von einem Antrieb wahlweise eines von zwei oder mehreren Abgangsrädern antreibbar ist, wobei das Umschalten ohne große Krafteinsatz eingeleitet werden kann.

Erfindungsgemäß ist obige Aufgabe dadurch gelöst, daß auf einem Eingangsrad eine Schaltscheibe mit Reibung frei drehbar konzentrisch gelagert ist, daß an der Schaltscheibe exzentrisch ein Verteilerrad drehbar gelagert ist, das mit einem konzentrischen Ritzel des Eingangsrades kämmt und dem zwei oder mehrere Abgangsräder zugeordnet sind, daß die Schaltscheibe mittels eines steuerbaren Betätigungsgliedes wenigstens in denjenigen Stellungen blockierbar ist, in denen das Verteilerrad mit jeweils einem der Abgangsräder kämmt, und daß die Blockierung mittels des Betätigungsgliedes aufhebbar ist, wobei die Schaltscheibe vom Eingangsrad mitgenommen das Verteilerrad, gegebenenfalls über eine Leerlaufstellung, zum nächsten Abgangsrad schwenkt.

Mit diesem Verteilergetriebe kann von einem einzigen Antriebsmotor nacheinander eines von mehreren Abgangsrädern angetrieben werden. Das Umschalten wird ohne besonderen Krafteinsatz durch einen kurzen Kraftimpuls eingeleitet, der lediglich die Blockierung aufheben muß. Das danach nötige Bewegen des Verteilerrades zum Auskuppeln aus dem Abgangsrad und zum Einkuppeln in das andere Abgangsrad erfolgt durch das Verteilergetriebe selbst. Die dafür erforderliche mechanische Leistung wird vom Antriebsmotor aufgebracht.

Das beschriebene Verteilergetriebe läßt sich nicht nur zum Antieb von Trommeln eines elektromechanischen Programmschaltwerks, sondern auch in allen anderen Fällen verwenden, in denen die genannte Aufgabe besteht.

Vorteilhafte Ausgestaltungen der Erfindung ergeben sich aus den Unteransprüchen und der folgenden Beschreibung von Ausführungsbeispielen. Besonders vorteilhaft ist bei einem der beschriebenen Ausführungsbeispiele, daß das Umschalten vom Antriebsrad selbst ausgelöst wird.

In der Zeichnung zeigen:
Figur 1 eine Aufsicht eines Verteilergetriebes in einem ersten Ausführungsbeispiel,
Figur 2 einen Schnitt längs der Linie II-II nach Fig. 1,
Figur 3 schematisch die Weiterbildung des Verteilergetriebes nach Fig. 1 und
Figur 4 ein weiteres Ausführungsbeispiel eines Verteilergetriebes in Aufsicht.

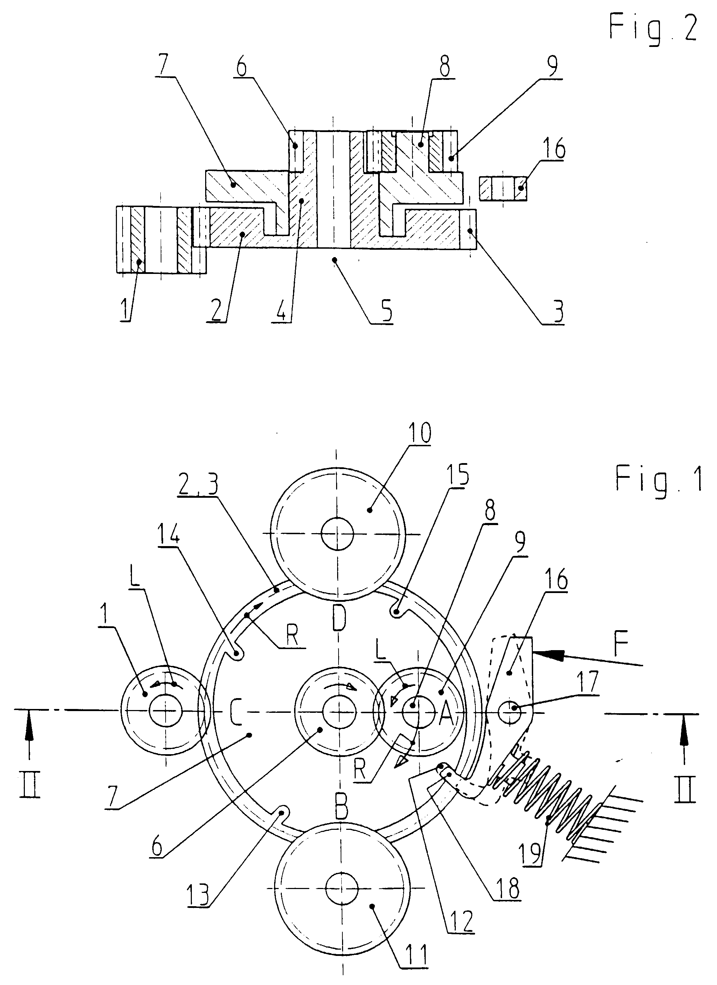

Ein von einem Motor antreibbares Antriebsrad(1) dient dem Antrieb eines Eingangsrades(2). Das Eingangsrad(2) weist eine Verzahnung(3) auf, mit der beim Ausführungsbeispiel nach den Figuren 1 bis 3 das Antriebsrad(1) kämmt. Am Eingangsrad(2) ist ein zu einer Achse(5) konzentrischer Lagerzapfen(4) ausgebildet, der ein Ritzel(6) bildet und an dem eine Schaltscheibe(7) frei drehbar gelagert ist, wobei gezielt zwischen der Schaltscheibe(7) und dem Lagerzapfen(4) eine Reibung geschaffen ist.

An der Schaltscheibe(7) ist ein zur Achse(5) exzentrischer Bolzen(8) ausgebildet, auf dem ein Verteilerrad(9) drehbar gelagert ist, welches mit dem Ritzel(6) kämmt.

Dem Verteilerrad(9) sind Abgangsräder(10,11) zugeordnet, welche an zur Achse(5) parallelen Achsen neben dem Eingangsrad(2) gelagert sind. Bei den Ausführungsbeispielen sind zwei Abgangsräder(10,11) gezeigt. Es könnten jedoch auch drei oder mehrere Abgangsräder vorgesehen sein.

Die Schaltscheibe(7) weist an ihrem Außenumfang vier Ausnehmungen(12,13,14,15) auf. Es sind also doppelt so viele Ausnehmungen wie Abgangsräder(10,11) vorgesehen. Dies dient, wie weiter unten beschrieben, dazu, zwischen den Antriebsstellungen(B,D) des Verteilerrades(9) Leerlaufstellungen(A,C) zu erreichen. Die Verteilung der Ausnehmungen(12 bis 15) entspricht der Verteilung der Abgangsräder(10,11) am Umfang des Eingangsrades(2).

Bei dem Ausführungsbeispiel nach den Figuren 1 bis 3 ist ein Steuerhebel(16) an einer Achse(17) drehbar gelagert. Der Steuerhebel(16) bildet eine Nase(18), welche in die Ausnehmungen(12 bis 15) eingreifen kann. Der Steuerhebel(16) ist mittels einer Feder(19) belastet, die die Nase(18) gegen die Schaltscheibe(7) drückt.

Die Funktionsweise des beschriebenen Verteilergetriebes ist im wesentlichen folgende:

In Figur 1 ist eine Leerlaufstellung(A) gezeigt, bei der das Verteilerrad(9) in einer Position steht, in der es mit keinem der Abgangsräder(10,11) kämmt. Das Antriebsrad(1) dreht sich linksdrehend(L). Dementsprechend drehen sich das Eingangsrad(2) und damit auch dessen Ritzel(6) rechtsdrehend(R), so daß sich das Verteilerrad(9) linksdrehend(L) dreht. Die Schaltscheibe(7) ist an ihrer Ausnehmung(12) durch die Nase(18) des Steuerhebels(16) blockiert. Dieser Zustand bleibt bestehen, bis ein Kraftimpuls(F) auf den Steuerhebel(16) wirkt. Dieser Kraftimpuls kann beispielsweise von einem von einer Steuerelektronik gesteuerten Magnet oder von einem anderen Schaltelement ausgeübt werden.

Beim Auftreten des Kraftimpulses(F) löst sich die Nase(18) aus der Ausnehmung(12). Die Schaltscheibe(7) ist jetzt frei und wird wegen der zwischen ihr und dem Eingangsrad(2) bestehenden Reibung in Richtung(R) mitgenommen, wodurch sich auch das Verteilerrad(9) in Richtung(R) mitbewegt.

Der Kraftimpuls(F) ist so kurz, daß er endet, bevor die Ausnehmung(15) unter der Nase(18) hindurchgeht. Nach dem Ende des Kraftimpulses(F) drückt die Feder(19) die Nase(18) gegen den Umfang der Schaltscheibe(7), so daß die Nase(18) in die Ausnehmung(15) einrastet, sobald diese zu ihr hin gedreht ist. Es ist dann die Schaltscheibe(7) wieder blockiert. In dieser Stellung befindet sich das Verteilerrad(9) in der Position(B), in der es mit dem Abgangsrad(11) kämmt. Es ist nun also das Abgangsrad(11) angetrieben. Das Abgangsrad(10) steht weiter still.

Wird wiederum ein Kraftimpuls(F) eingeleitet, dann gelangt in der beschriebenen Weise das Verteilerrad(9) in die Leerlaufposition(C). Die Schaltscheibe(7) ist jetzt an ihrer Ausnehmung(14) von der Nase(18) blockiert. Keines der Abgangsräder(10,11) ist angetrieben.

Beim nächsten Kraftimpuls(F) gelangt das Verteilerrad(9) in die Position(D). Es wird nun das Abgangsrad(10) angetrieben. Die Schaltscheibe(7) ist an ihrer Ausnehmung(13) blockiert.

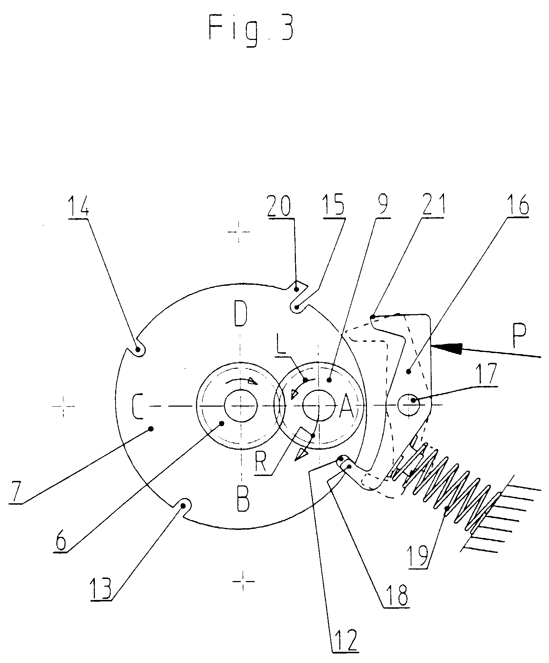

Bei der Ausführung nach Figur 1 weiß die Steuerelektronik, die die Kraftimpulse(F) auslöst, bei Betriebsbeginn nicht, in welcher Position das Verteilerrad(9) steht. Um Abhilfe zu schaffen, ist die Weiterbildung nach Figur 3 vorgesehen.

Nach Figur 3 ist bei der Ausnehmung(15) ein Anschlagzahn(20) vorgesehen. Diesem ist ein Anschlagglied(21) zugeordnet, das am Steuerhebel(16) ausgebildet ist. Zusätzlich zum kurzen Kraftimpuls(F) ist auf den Steuerhebel(16) ein längerer Kraftimpuls(P) ausübbar, der wenigstens so lang wie eine Umdrehung der Schaltscheibe(7) dauert.

Löst die Steuerelektronik den Kraftimpuls(P) aus, dann wird die Nase(18) aus der jeweiligen Ausnehmung geschwenkt und das Anschlagglied(21) ragt in die Bewegungsbahn des Anschlagzahnes(20). Nach spätestens einer Umdrehung trifft der Anschlagzahn(20) auf das Anschlagglied(21). Wird dann der Kraftimpuls(P) auf Null gesetzt, schwenkt der Steuerhebel(16) unter der Kraft der Feder(19) zurück, so daß dann der Anschlagzahn(20) gegen die Nase(18) geht und die Nase(18) in die Ausnehmung(15) eingreift. Es ist nun eine ganz bestimmte Referenzstellung erreicht. Im Beispielsfall steht in dieser Stellung das Verteilerrad(9) in der Position(B). Die Steuerelektronik kann also durch Auslösen eines Kraftimpulses(P) zu jedem notwendigen Zeitpunkt die Schaltscheibe(7) in eine Referenzstellung bringen. Irgend welche andere Positionsmeldungen des Getriebes an die Steuerelektronik sind hierfür nicht notwendig. Falls mehrere Referenzstellungen gewünscht, werden entsprechend mehrere Anschlagzähne(20) verwendet.

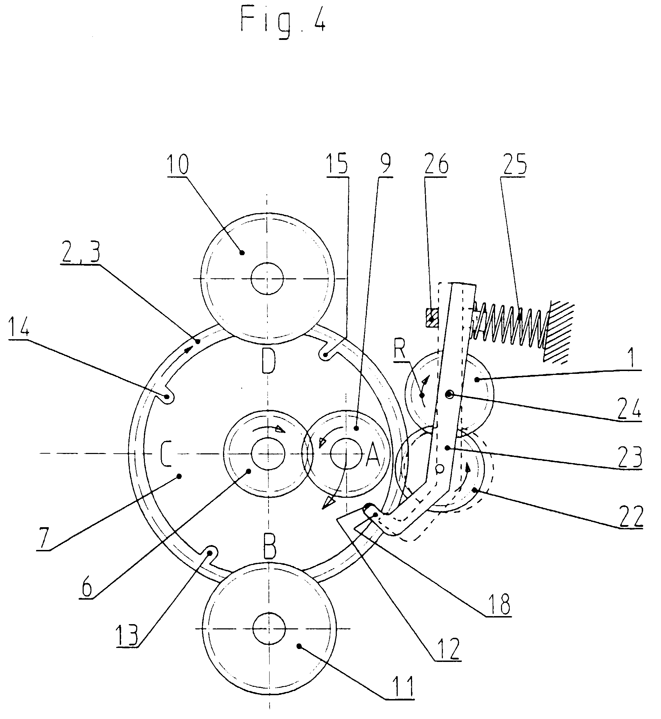

Beim Ausführungsbeispiel nach Figur 4 greift das Antriebsrad(1) - anders als beim Ausführungsbeispiel nach den Figuren 1 bis 3 - nicht direkt in das Eingangsrad(2), sondern treibt dieses über ein Zwischenrad(22) an. Das Zwischenrad(22) ist an einer Schaltwippe(23) drehbar gelagert und kämmt mit dem Antriebsrad(1). Die Schaltwippe(23) ist an der Achse(24) des Antriebsrads(1) schwenkbar gelagert. An der Schaltwippe(23) ist die beschriebene Nase(18) ausgebildet. An der Schaltwippe(23) greift eine Feder(25) an, die die Schaltwippe(23) gegen einen Anschlag(26) in die in Figur 4 strichliert dargestellte Stellung zu drücken versucht. In der in Figur 1 mit durchgezogenen Linien dargestellten Stellung der Schaltwippe(23) greift die Nase(18) in eine der Ausnehmungen(12 bis 15). Das Zwischenrad(22) kämmt mit der Verzahnung(3) des Eingangsrades(2) mit großer Eingriffstiefe.

In der in Figur 4 strichliert dargestellten Stellung der Schaltwippe(23) steht die Nase(18) außerhalb der Ausnehmungen(12 bis 15) und das Zwischenrad(22) kämmt mit dem Eingangsrad(2) nur mit geringer Eingriffstiefe.

Die Funktionsweise des Ausführungsbeispiels nach Figur 4 ist ausgehend von der in Figur 4 mit durchgezogenen Linien dargestellten Stellung etwa folgende:

Das rechtsdrehende(R) Antriebsrad(1) treibt über das Zwischenrad(22) das Eingangsrad(2) und damit das Ritzel(6) an, welches das Verteilerrad(9) antreibt. Das Verteilerrad(9) steht in der Leerlaufposition(A). Ein gezieltes Auslegen der Lagerung vom Eingangsrad(2) bewirkt, daß auch in dieser Position über die Verzahnungen zwischen dem Antriebsrad(1) und dem Zwischenrad(22) sowie diesem und der Verzahnung (3) ein Mindestdrehmoment übertragen wird. Dieses hat zur Folge, daß an diesen Verzahnungen Zahnflankenkräfte auftreten. Deren Wirkungslinien gehen an der Achse(24) vorbei, so daß auf die Schaltwippe(23) ein Schwenkmoment ausgeübt wird, welches die Nase(18) gegen die Kraft der Feder(25) in der Ausnehmung(12) hält. Die Schaltscheibe(7) ist blockiert.

Zum Umschalten des Verteilerrads(9) aus der Position(A) in die Position(B) wird das Antriebsrad(1) bzw. dessen Antriebsmotor von der Steuerelektronik kurz - entsprechend dem Kraftimpuls(F) - gestoppt. Es wird nun also kein Drehmoment übertragen, so daß die genannten Zahnflankenkräfte an den Verzahnungen, die Evolventen-Verzahnungen mit einem Eingriffswinkel von 15° bis 25°, insbesondere 20°, sind, verschwinden. Dementsprechend verschwindet auch das die Nase(18) in der Ausnehmung(12) haltende Schwenkmoment. Unter der Kraft der Feder(25) wird die Schaltwippe(23) nun gegen den Anschlag (26) in die strichlierte Stellung verschwenkt, in der das Zwischenrad(22) mit geringer Eingriffstiefe noch immer mit dem Eingangsrad(2) kämmt.

Beim folgenden Wiedereinschalten des Antriebsrades(1) in gleicher Drehrichtung(R) wird dann wieder ein Drehmoment über die Räder(1,22,2) übertragen. Da dieses sich vom Wert Null steigert, ist sein Betrag zunächst kleiner als das oben genannte Mindestdrehmoment. Trotzdem wird das Eingangsrad(2) bereits bewegt. Dies hat zur Folge, daß das sich drehende Eingangsrad(2) die Schaltscheibe (7) mitnimmt, wodurch sich die Ausnehmung(12) sofort von der Nase(18) entfernt, so daß die Nase(18) nicht mehr in die Ausnehmung(12) einfallen kann. Nach kurzer Zeit hat das Drehmoment den Schwellwert überschritten; deshalb wird die Schaltwippe(23) mit der Nase(18) gegen den Umfang der sich drehenden Schaltscheibe(7) gedrückt. Sie gleitet an diesem entlang. Die sich mit dem Eingangsrad(2) drehende Schaltscheibe(7) bringt das Verteilerrad(9) in die Position(B) und die Ausnehmung(15) zur Nase(18). Die Nase(18) greift nun in die Ausnehmung(15) und blockiert dadurch die Schaltscheibe(7). Das Verteilerrad(9) treibt das Abgangsrad(11) an.

Es ist also erreicht, daß durch einfaches, kurzzeitiges Stoppen des Antriebsrads(1) die Umschaltung eingeleitet und bei anschließendem Starten vollendet wird. Bei der Wiederholung der beschriebenen Vorgänge gelangt das Verteilerrad(9) in die Position(C) und die Position(D) sowie anschließend wieder in die Position(A). Eine Umkehr der Drehrichtung des Antriebsrades(1) ist in diesem Anwendungsbeispiel nicht vorgesehen.

## Patentansprüche

1. Verteilergetriebe, beispielsweise für ein elektromechanisches Programmschaltwerk, wobei
auf einem Eingangsrad(2) eine Schaltscheibe(7) mit Reibung frei drehbar konzentrisch gelagert ist, daß an der Schaltscheibe(7) exzentrisch ein Verteilerrad(9) drehbar gelagert ist, das mit einem konzentrischen Ritzel(6) des Eingangsrades(2) kämmt und dem zwei oder mehrere Abgangsräder(10,11) zugeordnet sind, daß die Schaltscheibe(7) mittels eines steuerbaren Betätigungsgliedes(18) wenigstens in denjenigen Stellungen(B,D) blockierbar ist, in denen das Verteilerrad(9) mit jeweils einem der Abgangsräder(10,11) kämmt, und daß die Blockierung mittels des Betätigungsgliedes(18) aufhebbar ist, wobei die Schaltscheibe(7) vom Eingangsrad(2) mitgenommen, das Verteilerrad(9), gegebenenfalls über eine Leerlaufstellung(C,A), zum nächsten Abgangsrad(10,11) schwenkt.

2. Verteilergetriebe nach Anspruch 1,
dadurch gekennzeichnet,
daß am Umfang der Schaltscheibe(7) Rastelemente, wie beispielsweise Ausnehmungen(12 bis 15), vorgesehen sind, an denen das Betätigungsglied(18) zur Blockierung der Schaltscheibe(7) angreift.

3. Verteilergetriebe nach einem der vorhergehenden Ansprüche 1 und 2,
dadurch gekennzeichnet,
daß das Betätigungsglied(18) an einer Schaltwippe(23) ausgebildet ist, daß die Schaltwippe(23) an der Achse(24) eines Antriebsrades(1) schwenkbar gelagert ist, daß an der Schaltwippe(23) ein Zwischenrad(22) drehbar gelagert ist, das mit dem Antriebsrad(1) kämmt und mehr oder weniger tief in die Verzahnung(3) des Eingangsrades(2) eingreift, daß bei tiefem Eingriff das Betätigungsglied(18) an einem der Rastelemente(12 bis 15) angreift und die Schaltscheibe(7) blockiert und bei weniger tiefem Eingriff das Betätigungsglied(18) die Schaltscheibe(7) freigibt, wobei bei einem zwischen dem Antriebsrad(1) und dem Eingangsrad(2) übertragenen Mindestdrehmoment infolge der auftretenden Zahnflankenkräfte ein Schwenkmoment entsteht, das die Schaltwippe(23) so verschwenkt, daß das Betätigungsglied(18) in seine Blockierstellung geht.

4. Verteilergetriebe nach Anspruch 3,
dadurch gekennzeichnet,
daß die Schaltwippe(23) durch eine Feder(25) belastet ist, die das Betätigungsglied(18) beim Stoppen des Antriebsrades(1) in die Freigabestellung bringt.

5. Verteilergetriebe nach einem der vorhergehenden Ansprüche,
dadurch gekennzeichnet,
daß am Umfang der Schaltscheibe(7) zusätzlich wenigstens ein Anschlagelement, wie beispielsweise ein Anschlagzahn(20), vorgesehen ist, dem ein steuerbares Anschlagglied(21) zugeordnet ist, das in die Bewegungsbahn des Anschlagelements(20) stellbar ist.

6. Verteilergetriebe nach einem der vorhergehenden Ansprüche,
dadurch gekennzeichnet,
daß das Betätigungsglied als Nase(18) an einem Steuerhebel(16) ausgebildet ist, der zur Blockierung der Schaltscheibe(7) federbelastet ist und zur Aufhebung der Blockierung durch einen kurzen Kraftimpuls(F) beaufschlagbar ist.

7. Verteilergetriebe nach Anspruch 5 und 6,
dadurch gekennzeichnet,
daß an dem Steuerhebel(16) das Anschlagglied als Anschlagzahn(21) ausgebildet ist und der Steuerhebel(16) zum Erreichen einer Referenzstellung der Schaltscheibe(7) durch einen längeren Kraftimpuls(P) für wenigstens eine Umdrehung der Schaltscheibe(7) beaufschlagbar ist.

## Claims

1. Transfer gear, for example for an electromechanical program switchgear, wherein on an input wheel (2) an index ring (7) is concentrically and freely rotatably mounted, and a transfer gear (9) is concentrically and rotatably mounted on the index ring (7), meshes with a concentric rack (6) of the input wheel (2) and is associated with two or more output wheels (10, 11), wherein the index ring (7) is lockable by means of a controllable actuator (18) at least in the positions (B, D) in which the transfer wheel (9) meshes with a respective output wheel (10, 11), and wherein locking by means of the actuator (18) can be cancelled, in which case the index wheel (7) is carried with the input wheel (2), the transfer wheel (9) pivots to the next output wheel (10, 11) optionally via an idling position (C, A).

2. Transfer gear according to claim 1, characterised in that on the circumference of the index ring (7) catch elements, such as recesses for example (12 to 15) are provided, on which the actuator (18) acts in order to lock the index ring (7).

3. Transfer gear according to one of the preceding claims 1 and 2,
characterised in that the actuator (18) is formed on a rocker bar (23), in that the rocker bar (23) is pivotably mounted on the shaft (24) of a drive wheel (1), in that on the rocker bar (23) an intermediate wheel (22) is rotatably mounted, which meshes with the drive wheel (1) and engages more or less deeply in the toothing (3) of the input wheel (2), in that in the case of deep engagement the actuator (18) acts on one of the catch elements (12 to 15) and locks the index wheel (7) and in the case of less deep engagement the actuator (18) releases the index wheel (7), in which case with a minimum torque transmitted between the drive wheel (1) and the input wheel (2), due to the forces of the tooth sides, a pivoting moment is produced which so pivots the rocker bar (23) that the actuator (18) moves into its locked position.

4. Transfer gear according to claim 3, characterised in that the rocker bar (23) is stressed by a spring (25), which upon stopping of the drive wheel (1) moves the actuator (18) into the released position.

5. Transfer gear according to one of the preceding claims, characterised in that on the circumference of the index ring (7) in addition at least one stop element, such as a stop tooth (20) for example, is provided, to which is allocated a controllable stop member (21), which can be placed in the path of motion of the stop element (20).

6. Transfer gear according to one of the preceding claims, characterised in that the actuator is formed as a lug (18) on a control lever (16), which is spring-loaded for locking of the index ring (7) and for cancelling locking by a short thrust (F).

7. Transfer gear according to claim 5 and 6, characterised in that on the control lever (16) the stop member is formed as a stop tooth (21) and the control lever (16) can be acted in order to reach a reference position of the index wheel (7) by a longer thrust (P) for at least one revolution of the index wheel (7).

## Revendications

1. Boîte de transfert, par exemple pour un mécanisme de commutation de programmation électromécanique, un disque de commutation (7) étant monté sur une roue d'entrée (2), concentriquement avec une possibilité de rotation libre, avec frottement, sur le disque de commutation (7) étant montée, à rotation et de façon excentrique, une roue de distribution (9) qui s'engrène avec un pignon (6), concentrique et appartenant à la roue d'entrée (2), et roue de distribution (9) à laquelle sont associées deux roues de sortie (10, 11) ou plus, le disque de commutation (7) étant susceptible d'être bloqué au moyen d'un organe d'actionnement (18) pouvant être commandé, le blocage se produisant au moins dans les positions (B, D) dans lesquelles la roue de distribution (9) s'engrène respectivement avec l'une des roues de sortie (10, 11), le blocage étant susceptible d'être supprimé au moyen de l'organe d'actionnement (18), le disque de commutation (7) étant entraîné conjointement par la roue d'entrée (2), la roue de distribution (9) pivotant par rapport à la roue de sortie (10, 11) suivante, le cas échéant en passant par une position de marche à vide (C, A).

2. Boîte de transfert selon la revendication 1, caractérisée en ce qu'à la périphérie du disque de commutation (7) sont prévus des éléments d'encliquetage, tels que par exemple des évidements (12 à 15), sur lesquels l'organe d'actionnement (18) s'engage pour assurer le blocage du disque de commutation (7).

3. Boîte de transfert selon l'une des revendications 1 et 2 précédentes, caractérisée en ce que l'organe d'actionnement (18) est réalisé sur un balancier-culbuteur de commutation (23), en ce que le culbuteur de commutation (23) est monté pivotant sur l'axe (24) d'une roue d'entraînement (1), en ce que sur le culbuteur de commutation (23) est monté de façon tournante une roue intermédiaire (22) qui s'engrène avec la roue d'entraînement (1) et s'engrène plus ou moins profondément dans la denture de la roue d'entrée (2), en ce que, dans le cas d'un engagement profond, l'organe d'actionnement (18) s'engage sur l'un des éléments d'encliquetage (12 à 15) et bloque le disque de commutation (17) et, en cas d'un engagement moins profond, l'organe d'actionnement (18) libère le disque de commutation (7), en cas de transmission d'un couple minimal entre la roue d'entraînement (1) et la roue d'entrée (2) se produisant, suite aux efforts exercés sur les flancs de roue, un couple de pivotement qui fait pivoter le culbuteur de commutation (23) de manière à faire passer l'organe d'actionnement (18) dans sa position de blocage.

4. Boîte de transfert selon la revendication 3, caractérisée en ce que le culbuteur de commutation (23) est sollicité par un ressort (25) qui place en position de libération l'organe d'actionnement (18) lors de l'arrêt de la roue d'entraînement (1).

5. Boîte de transfert selon l'une des revendications précédentes, caractérisée en ce qu'à la périphérie du disque de commutation (7) est prévu en plus au moins un élément de butée, tel que par exemple une roue de butée (20), auquel est associé un organe de butée (21) pouvant être commandé et pouvant être placé dans la trajectoire de déplacement de l'élément de butée (20).

6. Boîte de transfert selon l'une des revendications précédentes, caractérisée en ce que l'organe d'actionnement est réalisé sous la forme d'un ergot (18) sur un levier de commande (16), qui est sollicité par un ressort pour assurer le blocage du disque de commutation (7) et qui peut être sollicité par une courte impulsion de force (F), en vue de faire cesser le blocage.

7. Boîte de transfert selon les revendications 5 et 6, caractérisée en ce que, sur le levier de commande (16), l'organe de butée est réalisé sous la forme de dent de butée (21), et le levier de commande (16) est susceptible d'être sollicité pour atteindre une position de référence du disque de commutation (7), au moyen d'une impulsion de force (P) de durée plus longue, pour au moins une rotation d'un tour du disque de commutation (7).
